# EUROPEAN PATENT APPLICATION

(11) **EP 1 975 012 A1**
(43) Date of publication of application: **01.10.2008**
(21) Application number: 07706555.5
(22) Date of filing: 11.01.2007
(51) Int. Cl.: B60R 21/20

(54) **CURTAIN AIR BAG SYSTEM**

(30) Priority: 19.01.2006 JP 2006010658
(71) Applicant: TAKATA CORPORATION, Minato-ku, Tokyo 106-8510 (JP)
(72) Inventor: KATAGIRI, Noriko, Tokyo 106-8510 (JP)
(74) Representative: Banzer, Hans-Jörg
(86) International application number: PCT/JP2007/050208
(87) International publication number: WO 2007/083554

(57) **Abstract**

[Object] To prevent an attaching piece of a curtain airbag from rotating in a rotating direction of an attaching bolt without a projection provided at a bracket, and to facilitate an attaching operation of an airbag to a vehicle body.

[Solving Means] In a curtain airbag apparatus, a plurality of attaching pieces 23 provided at an upper end of a curtain airbag 20 in a cover member 22 and protruding from the cover member 22 are fixed to a plurality of attaching portions 28 provided at a cabin of a vehicle body, with attaching bolts 43 via brackets 40. Each of the brackets 40 is formed of two rectangular metal plates and is previously attached so as to sandwich each attaching piece 23. A rectangular recessed portion 30 is provided at each attaching portion 28 of the vehicle body. A vehicle-body-side bracket 41 of the bracket 40 is inserted to the recessed portion 30, and four sides of the bracket 41 are supported by inner wall surfaces of the recessed portion 30. Thus, the vehicle-body-side bracket 41 is non-rotatably engaged with the recessed portion 30.

## Description

### Technical Field

The present invention relates to a curtain airbag apparatus that is deployed downward along the inside of a vehicle cabin at a time of collision of an automobile or the like for restraining a head portion or a shoulder portion of an occupant.

### Background Art

Hitherto, as a curtain airbag apparatus of an automobile for restraining a driver and a passenger, a curtain airbag apparatus has been used, in which a folded curtain airbag is inflated at a time of collision of a vehicle, and is deployed downward along the inside of a vehicle cabin in a curtain-like manner, to restrain a head portion or a shoulder portion of a passenger.

This curtain airbag apparatus is configured such that a curtain airbag is folded and covered with a cover member capable of being ruptured; the airbag is attached to the vehicle body by temporarily fixing a plurality of attaching pieces, which are provided at an upper end of the airbag and protrude from the cover member, to a plurality of attaching portions, which are provided at an intersecting corner portion between a ceiling portion and a side face portion in a cabin of a vehicle body via brackets, and then by fixing the airbag using bolts or the like; and an inflator attached to the intersecting portion is connected to an end of the airbag in a longitudinal direction (for example, see Patent Document 1).
Patent Document 1: Japanese Unexamined Patent Application Publication No. 2000-247203

### Disclosure of Invention

### Problems to be Solved by the Invention

The technique disclosed in the above patent document is configured such that latching legs are provided at brackets made of a metal plate, which hold the attaching pieces of the curtain airbag from both sides; the latching legs are hooked to openings provided at the attaching portions of a vehicle body; and the attaching pieces are temporarily fixed. Thereby, when the attaching pieces are fixed to the attaching portions of the vehicle with bolts, the attaching pieces can be prevented from rotating in a bolt-rotating direction.

However, since projections as the latching legs protrude from the brackets, other parts may be hooked and damaged in the delivery of the curtain airbag apparatus, or a wear of a worker may be hooked at a time of attaching the apparatus to the vehicle body, and therefore, the attaching operation of the curtain airbag apparatus may be troublesome.

An object of the present invention is to provide a curtain airbag apparatus capable of facilitating an attaching operation of a curtain airbag to a vehicle body, without a projection provided at a bracket, and capable of preventing an attaching piece of the curtain airbag from rotating in a rotating direction of an attaching bolt.

### Means for Solving the Problems

In order to achieve the object, a first invention of the subject application provides a curtain airbag apparatus in which a folded airbag is held by a holding member capable of being ruptured, a plurality of attaching pieces are provided at an upper end of the airbag, brackets respectively attached to the attaching pieces are screwed to a plurality of attaching portions provided at a vehicle body, and an inflator is provided for supplying compressed fluid that inflates and deploys the airbag. Thus, each of the brackets is non-rotatably engaged with each of the attaching portions of the vehicle body by utilizing fitting between recessed and protruding structures.

With the first invention of the subject application, since the bracket is non-rotatably engaged with the attaching portion of the vehicle body by utilizing fitting between the recessed and protruding structures, the attaching piece of the curtain airbag can be prevented from rotating in a rotating direction of an attaching bolt, thereby facilitating an attaching operation of the airbag to the vehicle body.

In a second invention of the subject application, in view of the first invention, the bracket has a shape provided with at least two opposite sides, and a recessed portion is provided at the attaching portion of the vehicle body, the recessed portion non-rotatably supporting the bracket because inner surfaces of the recessed portion come into contact with the two opposite sides of the bracket.

With the second invention of the subject application, since the recessed portion non-rotatably supports the bracket because the inner surfaces of the recessed portion come into contact with the two opposite sides of the bracket, the bracket can be non-rotatably engaged with the recessed portion.

In a third invention of the subject application, in view of the first invention, the bracket has a shape provided with at least two opposite sides, and a protruding ridge and a recessed portion are provided at the attaching portion of the vehicle body, the recessed portion non-rotatably supporting the bracket because inner surfaces of the recessed portion come into contact with the two opposite sides of the bracket.

With the third invention of the subject application, since the inner surfaces of the recessed portion provided by the protruding ridge at the attaching portion of the vehicle body come into contact with the two opposite sides of the bracket, the bracket can be non-rotatably engaged with the recessed portion.

In a fourth invention of the subject application, in view of the second or third invention, the two opposite sides of the bracket are upper and lower sides thereof.

With the fourth invention of the subject application, since the bracket, which is engaged with the recessed portion of the attaching portion of the vehicle body, is supported by the upper and lower sides of the recessed portion, the bracket can be held by the recessed portion, and the attaching piece of the curtain airbag can be temporarily fixed accordingly.

In a fifth invention of the subject application, in view of the fourth invention, a pressing piece protrudes from a peripheral edge portion of the recessed portion to an opening plane of the recessed portion, the pressing piece pressing a side of the bracket.

With the fifth invention of the subject application, since the side of the bracket engaged with the recessed portion of the attaching portion of the vehicle body is pressed by the pressing piece, the bracket held by the recessed portion can be prevented from being disengaged from the recessed portion, and the attaching piece of the curtain airbag can be temporarily fixed.

In a sixth invention of the subject application, in view of the fifth invention, the pressing piece is made of a member provided separately from the vehicle body, the pressing piece being attached to the peripheral edge portion of the recessed portion of the vehicle body.

With the sixth invention of the subject application, the bracket can be prevented from being disengaged from the recessed portion of the attaching portion of the vehicle body by the pressing piece made of the member provided separately from the vehicle body. Further, by forming the pressing piece of the member using an elastic member such as plastic, the bracket can be inserted to the recessed portion from above the pressing piece with a pressure, and thus, the bracket can be easily engaged with the recessed portion.

In a seventh invention of the subject application, in view of the first invention, the bracket has a shape provided with at least two opposite sides, a pair of supporting frames having grooves are attached to the attaching portion of the vehicle body with an interval, and a recessed portion is provided between the pair of supporting frames, the recessed portion housing the bracket by inserting the two opposite sides of the bracket to the grooves.

With the seventh invention of the subject application, by engaging the two opposite sides of the bracket with the recessed portion between the supporting frames by inserting the two opposite sides of the bracket to the grooves of the pair of supporting frames, the bracket can be non-rotatably engaged with the recessed portion. Further, when the bracket includes upper and lower sides as opposite sides, the bracket can be held by the recessed portion, and the attaching piece of the curtain airbag can be temporarily fixed by disposing the pair of supporting frames at upper and lower sides, and by inserting the upper and lower sides of the bracket to the grooves of the supporting frames.

In an eighth invention of the subject application, in view of any one of the second to seventh inventions, the bracket is made of plastic.

With the eighth invention of the subject application, since the bracket is flexible, the bracket can be easily engaged with the recessed portion of the attaching portion of the vehicle body.

In a ninth invention of the subject application, in view of any one of the second to eighth inventions, the bracket has a vehicle-body-side bracket and a vehicle-cabin-side bracket being attached to the attaching piece of the curtain airbag so as to sandwich the attaching piece from both sides, and the vehicle-body-side bracket can be engaged with the recessed portion of the attaching portion of the vehicle body.

With the ninth invention of the subject application, by engaging the vehicle-body-side bracket of the bracket with the recessed portion of the attaching portion, the bracket can be engaged with the attaching portion of the vehicle body.

In a tenth invention of the subject application, in view of the ninth invention, a gap-filling member is provided between the vehicle-body-side bracket and the recessed portion of the attaching portion of the vehicle body.

With this configuration, the anti-rotation function and the temporarily fixing function for the attaching piece of the curtain airbag can be enhanced. Advantages

According to the curtain airbag apparatus of the present invention, since an attaching piece of a curtain airbag can be prevented from rotating in a rotating direction of an attaching bolt without providing a projection at a bracket, the curtain airbag can be easily attached to an attaching portion of a vehicle body. Best Mode for Carrying Out the Invention

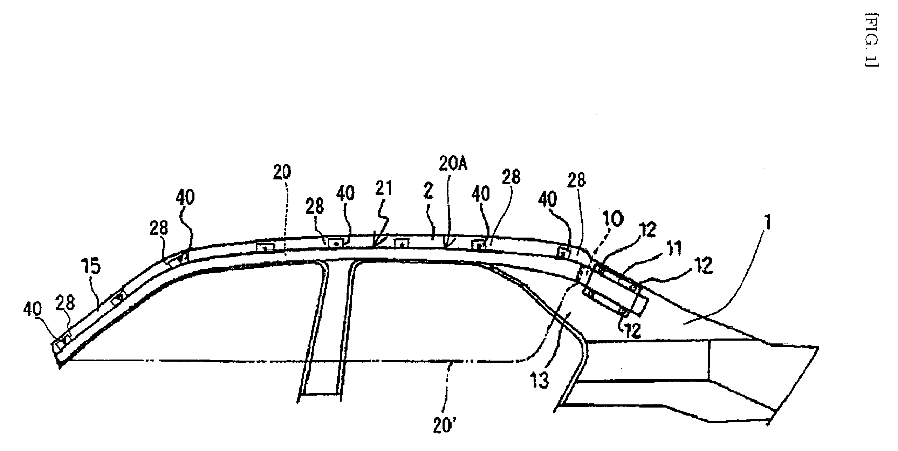

Embodiments of the present invention are described below with reference to the drawings. Fig. 1 is an explanatory view showing a condition in which a curtain airbag apparatus 20A according to a first embodiment of the present invention is attached to an automobile.

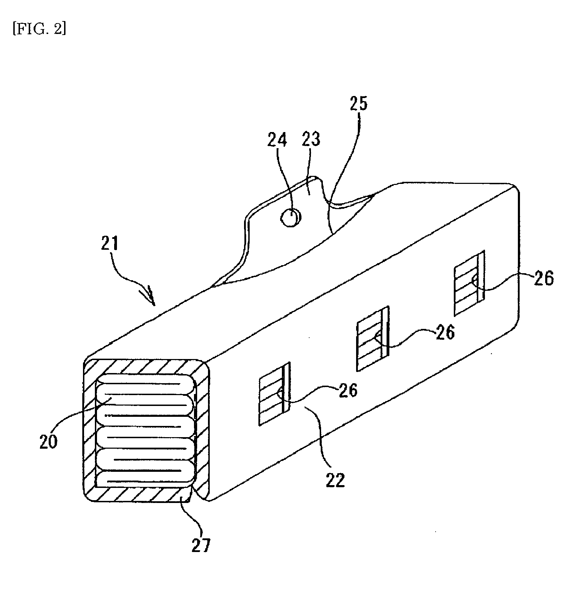

In Fig. 1, the curtain airbag apparatus 20A is provided at an intersecting corner portion between a ceiling portion and a side face portion of a cabin of a vehicle body 1 of the automobile. The curtain airbag apparatus 20A includes a curtain airbag main body 21 in which a folded curtain airbag 20 (see Fig. 2) is covered with and held by a cover member 22 (holding member) capable of being ruptured, an inflator 10 that supplies gas into the curtain airbag 20 from a rear portion of the curtain airbag main body 21, and various types of sensors that detect occurrence (or prediction of occurrence) of a collision (including a side collision or the like) or a rolling of the automobile, when the automobile encounters the collision or the rolling. Further, an inflator control circuit (not shown) activates an initiator (not shown) of the inflator 10 on the basis of detecting signals from these sensors. At a time when the collision occurs, the curtain airbag 20 is inflated and deployed downward as indicated by a double-dotted line 20' in Fig. 1, to restrain a head portion of an occupant.

As shown in Fig. 2 the curtain airbag 20 is folded, and superposed in a vertical direction in a zigzag manner to form a rectangular cross section. An ear-shaped attaching piece 23 protruding at an upper end of the curtain airbag 20 protrudes upward through a long opening portion (slot) 25 provided at an upper surface portion of a cover member 22 near a vehicle. A plurality of the attaching pieces 23 are provided along a longitudinal direction of the curtain airbag 20, and an insertion hole 24 for an attaching bolt is provided at each of the attaching pieces 23. At a side face portion of the cover member 22 near a vehicle cabin, a plurality of vertically extending openings 26 are provided along the longitudinal direction, whereby a folded condition of the curtain airbag 20 can be observed through the openings 26 from the outside of the cover member 22. At a corner portion of the vehicle cabin where the side face portion and a bottom face portion of the cover member 22 near the vehicle cabin intersect with each other, a fragile portion 27 is provided to serve as a rupturing point of the cover member 22 at a time when the curtain airbag 20 is inflated.

The curtain airbag 20 has a shape curved in the longitudinal direction, and is screwed to the intersecting corner portion between the ceiling portion and the side face portion of the cabin of the vehicle body 1, in particular, screwed to attaching portions 28 provided at a curved portion extending from an A-pillar 15 to a roof side rail 2, via brackets 40. The inflator 10 is provided on a C-pillar 13 located at a rear portion of the vehicle body 1, and the inflator 10 is attached to the C-pillar 13 with bolts 12 via a bracket 11 that surrounds the inflator 10.

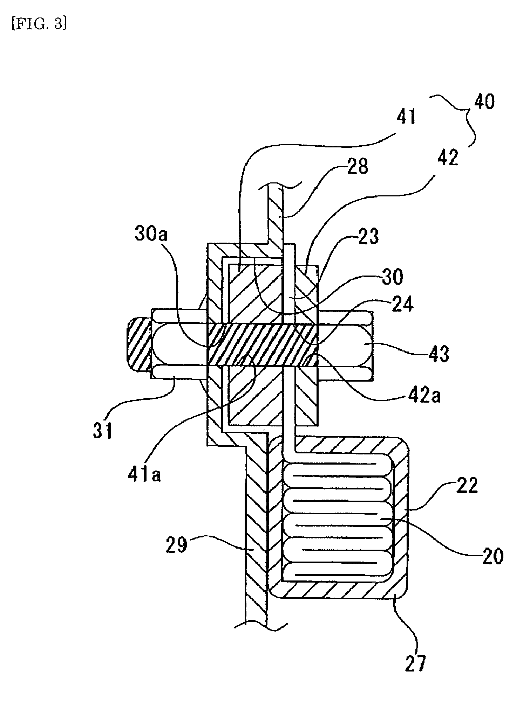

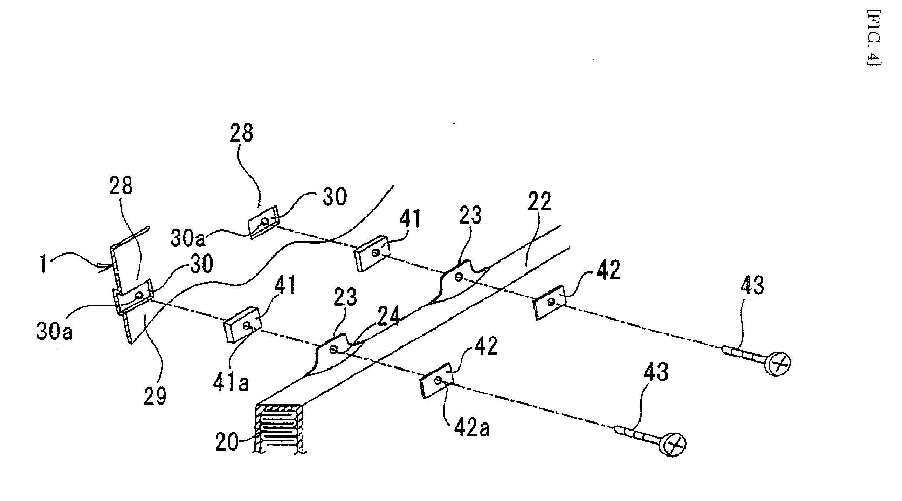

Fig. 3 is cross section showing an attaching structure of the curtain airbag 20 to the attaching portion 28 of the vehicle body 1 according to the present embodiment, and Fig. 4 is an exploded perspective view of the attaching structure. The bracket 40 composed of two rectangular metal plates is mounted to the attaching piece 23 of the curtain airbag 20. In Fig. 4, although both a vehicle-body-side bracket 41 and a vehicle-cabin-side bracket 42 of the bracket 40 are shown as members located distant from the attaching piece 23 of the curtain airbag 20, both brackets 41 and 42 are fixed by appropriate fixing means such as caulking, or using a rivet or an adhesive, while insertion holes 41a and 42a for the attaching bolts, the insertion holes 41a and 42a which are respectively provided at the brackets 41 and 42, are aligned with the insertion holes 24 for the attaching bolts for the curtain airbag 20, and the attaching pieces 23 are sandwiched from both sides. In the bracket 40, the vehicle-body-side bracket 41 has a thickness larger than that of the vehicle-cabin-side bracket 42.

In an inner plate 29 of the vehicle body 1, to which the attaching pieces 23 are attached, a recessed portion 30 having a rectangular cross section is provided at each of the attaching portions 28 by pressing the inner plate 29. The recessed portion 30 has a size that allows the vehicle-body-side bracket 41 of the bracket 40 to be housed, and four sides of the bracket 41 to come into contact with four inner wall surfaces of the recessed portion 30 and to be engaged therewith. At a bottom portion of the recessed portion 30 in a recessed direction, an insertion hole 30a for an attaching bolt is provided, and a welded nut 31 is jointed at the periphery of the insertion hole 30a at a rear surface of the recessed portion 30.

When the curtain airbag 20 is attached to the attaching portion 28 of the vehicle body 1, firstly, the vehicle-body-side bracket 41 is inserted to the recessed portion 30 of the attaching portion 28 by supporting the bracket 40 with hand. At this moment, the substantially entire vehicle-body-side bracket 41 is fitted to the recessed portion 30. Then, since the four sides of the vehicle-body-side bracket 41 come into contact with the four inner wall surfaces of the recessed portion 30, the four sides of the bracket 41 are supported by the four inner wall surfaces of the recessed portion 30, and the bracket 40 is non-rotatably engaged with the recessed portion 30. In addition, since the vehicle-body-side bracket 41 has the relatively large thickness, the bracket 40 is held by the recessed portion 30. Accordingly, the attaching piece 23 can be temporarily fixed to the recessed portion 30 via the bracket 40, and the attaching piece 23 can be prevented from rotating.

Then, an attaching bolt 43 is inserted to the insertion hole 42a of the vehicle-cabin-side bracket 42 from a side of the bracket 42, and the attaching bolt 43 is screwed with the welded nut 31 after the attaching bolt 43 is inserted through the insertion hole 24 of the attaching piece 23, through the insertion hole 41a of the vehicle-body-side bracket 41, and through the insertion hole 30a of the recessed portion 30, and then is fastened. Since the vehicle-body-side bracket 41 is prevented from rotating because of the contact with the inner wall surfaces of the recessed portion 30, the attaching piece 23 does not rotate in the rotating direction of the attaching bolt 43 because of the fastening operation, and the attaching piece 23 can be fixed to the recessed portion 30 via the bracket 40. Thus, the curtain airbag 20 can be easily attached to the vehicle body 1.

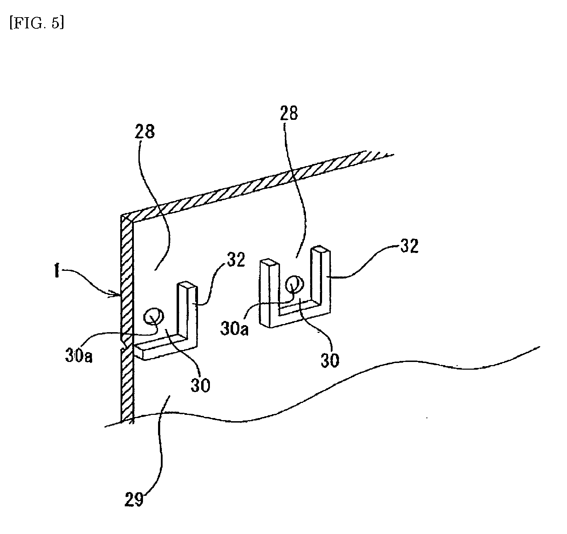

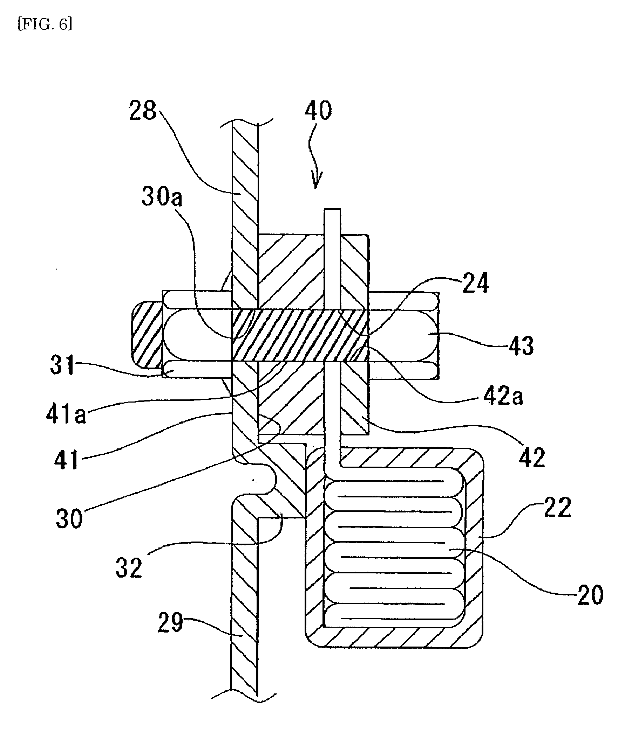

Fig. 5 is a perspective view showing an attaching portion 28 of a vehicle body 1 according to a second embodiment of the present invention, and Fig. 6 is a cross section showing an attaching structure of a curtain airbag 20 to the attaching portion 28.

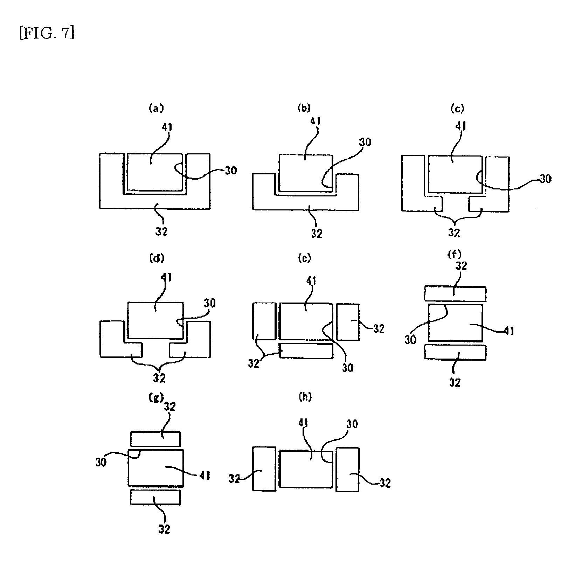

In the present embodiment, a C-shaped bead (protruding ridge) 32 with an upper side thereof being opened protrudes from the attaching portion 28 by pressing the inner plate 29 of the vehicle body 1, to form a recessed portion 30 with an upper side thereof being opened, at the inside of the bead 32. As shown in Fig. 7(a), the recessed portion 30 has a size that allows the vehicle-body-side bracket 41 of the bracket 40 to be housed, and three left, right, and bottom sides of the vehicle-body-side bracket 41 to come into contact with left, right, and lower inner wall surfaces. Other configurations of the present embodiment are basically similar to those of the first embodiment, and in Figs. 5 and 6, like numerals in Figs. 2 to 4 refer like elements.

Similarly to the first embodiment, when the vehicle-body-side bracket 41 is inserted to the recessed portion 30 of the attaching portion 28 by supporting the bracket 40 with hand, the substantially entire vehicle-body-side bracket 41 is fitted to the recessed portion 30. Since the three left, right, and bottom sides of the vehicle-body-side bracket 41 having a relatively large thickness come into contact with the left, right, and bottom inner wall surfaces of the recessed portion 30, the attaching piece 23 can be temporarily fixed to the recessed portion 30 via the bracket 40, and the attaching piece 23 can be prevented from rotating. Then, as mentioned above, the attaching bolt 43 inserted to the insertion hole 42a of the vehicle-cabin-side bracket 42 is screwed with the welded nut 31 after the attaching bolt 43 is inserted through the insertion hole 24 of the attaching piece 23, though the insertion hole 41a of the vehicle-body-side bracket 41, and through the insertion hole 30a of the recessed portion 30, and then is fastened. As a result, the attaching piece 23 can be fixed to the recessed portion 30 via the bracket 40 while the attaching piece 23 is prevented from rotating in the rotating direction of the attaching bolt 43. Thus, the curtain airbag 20 can be fixed to the vehicle body 1.

In the present embodiment, although the bead 32 is provided at the attaching portion 28 of the vehicle body 1 as shown in Fig. 7(a), the bead 32 can have any form as long as the recessed portion 30 has inner surfaces which come into contact with at least two opposite sides of the vehicle-body-side bracket 41. Modifications of the bead 32 are shown in Figs. 7(b) to (h). Fig. 7(b) illustrates a case where the left and right sides of the bead 32 in Fig. 7(a) are shortened. Fig. 7(c) illustrates a case where two left and right beads 32 are provided such that a center portion of the lower side of the bead 32 in Fig. 7(a) is removed and the bead 32 is divided into two. Fig. 7(d) illustrates a case where the two left and right beads 32 in Fig. 7(c) are shortened at upper sides thereof. Fig. 7(e) illustrates a case where three beads 32 are provided such that the bead 32 in Fig. 7(a) is cut into left, right, and lower sides. Fig. 7(f) illustrates a case where two upper and lower beads 32 are provided. Fig. 7(g) illustrates a case where the two upper and lower beads 32 in Fig. 7(f) are shortened. Fig. 7(h) illustrates a case where two left and right beads 32 are provided. In any of the recessed portion 30 formed with the bead 32 in Figs. 7(a) to (g), the two opposite left and right sides and the lower side, or two opposite upper and lower sides, of the vehicle-body-side bracket 41, come into contact with the inner wall surfaces of the recessed portion 30. Therefore, the bracket 40, i.e., the attaching piece 23 can be temporarily fixed and the attaching piece 23 can be prevented from rotating. In the case of the recessed portion 30 with the beads 32 in Fig. 7(h) is that only two opposite left and right sides of the vehicle-body-side bracket 41 come into contact with the inner wall surfaces of the recessed portion 30, the rotation can be prevented although the temporarily fixing operation cannot be performed.

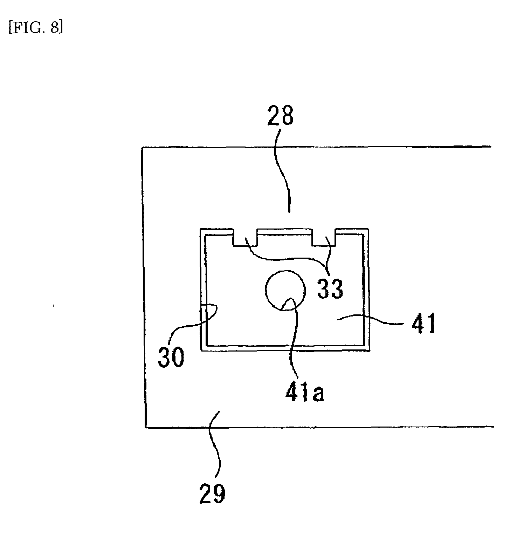

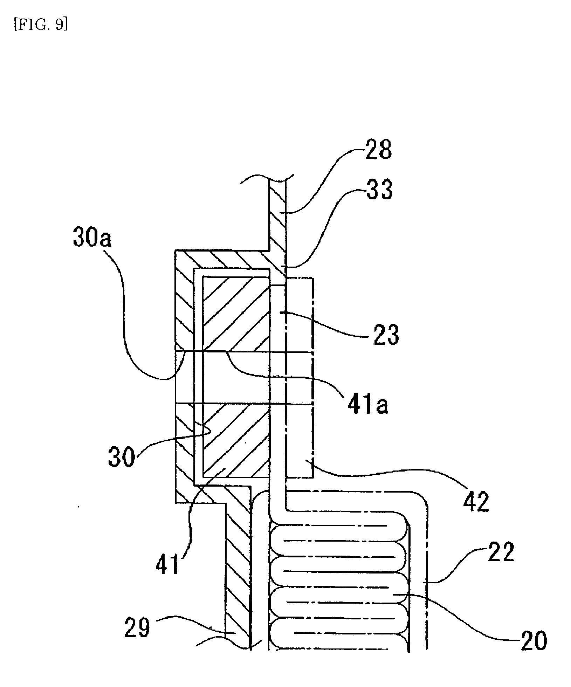

Fig. 8 is a partially omitted, front elevation showing an attaching portion 28 of a vehicle body 1, according to a third embodiment of the present invention, in which members of the bracket 40 located at a front side with respect to the vehicle-body-side bracket 41 are omitted. Fig. 9 is a cross section showing an attaching structure of a curtain airbag 20 to the attaching portion 28. In the present embodiment, two pressing pieces 33 protrude toward an opening plane of the recessed portion 30 with an interval in a width direction, for example, by cutting and bending pieces provided at an inner surface of the recessed portion 30 of the inner plate 29 of the vehicle body 1, at an upper edge portion of the recessed portion 30 of the attaching portion 28 of the vehicle body 1.

When the vehicle-body-side bracket 41 of the bracket 40 is engaged with the recessed portion 30 (so that the bracket 41 is substantially entirely fitted to the recessed portion 30), the bracket 41 may be disengaged from the recessed portion 30 and the temporarily fixing operation becomes impossible, depending on the weight of the curtain airbag 20. In the present embodiment, since an upper edge of the vehicle-body-side bracket 41 can be pressed by the pressing pieces 33 of the recessed portion 30, the bracket 41 can be prevented from being disengaged, thereby temporarily fixing the curtain airbag 20.

As described above, while the two protruding pressing pieces 33 are provided at the upper edge portion of the recessed portion 30, the number of the pressing pieces 33 may be one. Alternatively, a pressing piece 33 may be provided in a belt-shaped manner across an entire length in a width direction of the upper edge portion of the recessed portion 30. Still alternatively, a pressing piece 33 may be provided at a left, right, or lower edge portion of the recessed portion 30. In either case, the vehicle-body-side bracket 41 can be prevented from being disengaged, and the curtain airbag 20 can be temporarily fixed.

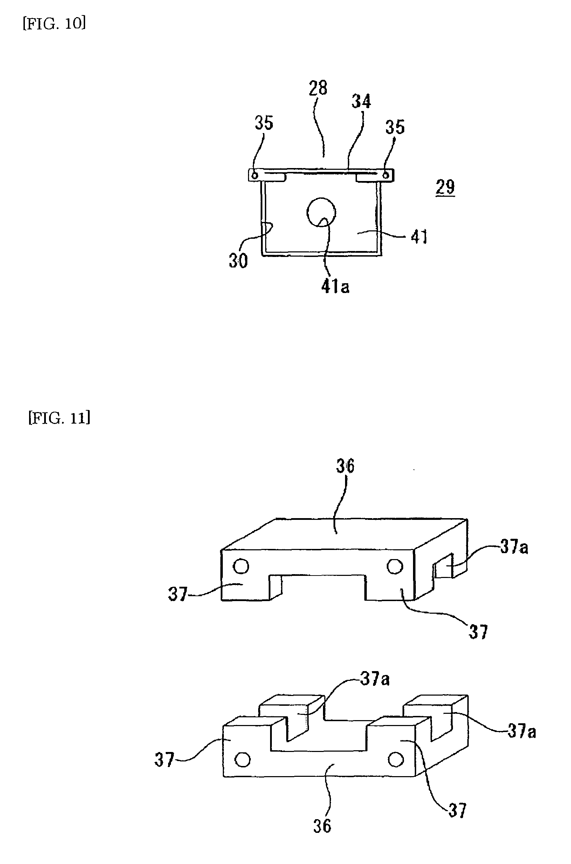

Fig. 10 is a partially omitted, front elevation showing an attaching portion 28 of a vehicle body 1 according to a fourth embodiment of the present invention. In the present embodiment, pressing pieces 34 made of an elastic member such as plastic, which are provided separately from the inner plate 29 of the vehicle body 1, are attached with screws 35 to an upper edge portion of the recessed portion 30 of the attaching portion 28 of the vehicle body 1. Instead of using the screws 35, the pressing piece 34 may have latching legs with hook-shaped tip ends at both the left and right ends of the pressing piece 34 on a surface thereof along the vehicle body 1, opening portions may be formed at positions corresponding to these latching legs in the inner plate 29, and the hook-shaped latching legs may be pressed and inserted to the opening portions for engagement. With this configuration, the pressing piece 34 can be further easily attached to the upper edge portion of the recessed portion 30 of the vehicle body 1.

While the end portions of the pressing piece 34 protrude downward to press both end portions of the upper edge of the vehicle-body-side bracket 41, which is engaged with the recessed portion 30 (so that the bracket 41 is substantially entirely fitted to the recessed portion 30), a pressing piece 34 may have a shape to press the entire upper edge. Alternatively, a pressing piece 34 may be provided at a left, right, or lower edge portion of the recessed portion 30.

Even with the separately provided pressing piece 34, the bracket 41 can be prevented from being disengaged, and the curtain airbag 20 can be temporarily fixed. Further, since the pressing piece 34 is made of the elastic member, the vehicle-body-side bracket 41 can be inserted to the recessed portion 30 by pressing the bracket 40 from above the pressing piece 34, and therefore, the vehicle-body-side bracket 41 can be easily engaged with the recessed portion 30.

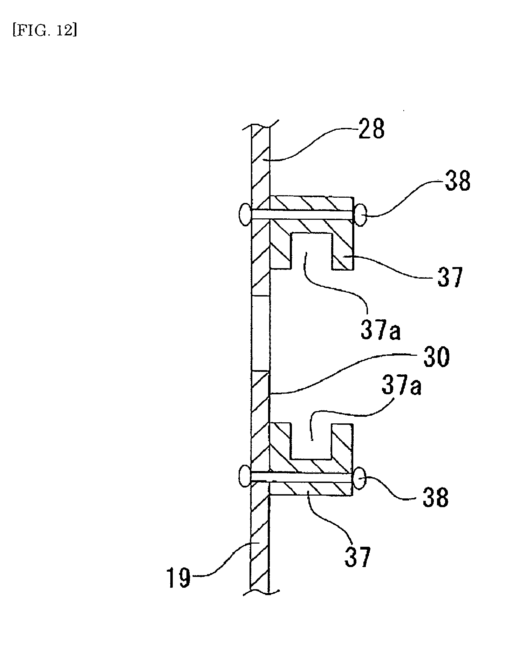

Fig. 11 is a perspective view showing supporting frames 36 for engaging a bracket 41 according to a fifth embodiment of the present invention, and Fig. 12 is cross section showing a condition in which the supporting frames 36 are installed at an attaching portion 28 of a vehicle body 1.

Each of the supporting frames 36 has a C-shaped cross section in which both end portions 37 and 37 have grooves 37a. The recessed portion 30 is formed such that the pair of the supporting frames 36 and 36 are disposed with an interval in a vertical direction and are fixed to the attaching portion 28 with rivets or the like, to house the bracket 41 between the pair of supporting frames 36 and 36 (so that the bracket 41 is substantially entirely fitted).

When upper and lower sides of the vehicle-body-side bracket 41 of the bracket 40 are inserted to the grooves 37a and 37a of the upper and lower supporting frames 36 and 36, and housed in the recessed portion 30, the upper and lower sides of the bracket 41 are supported by inner surfaces of the grooves 37a and 37a that are configured to sandwich the bracket 41. Accordingly, the vehicle-body-side bracket 41 can be non-rotatably engaged with the recessed portion 30, and the attaching piece 23 of the curtain airbag 20 can be temporarily fixed to the attaching portion 28 of the vehicle body 1 via the bracket 40 and prevented from rotating.

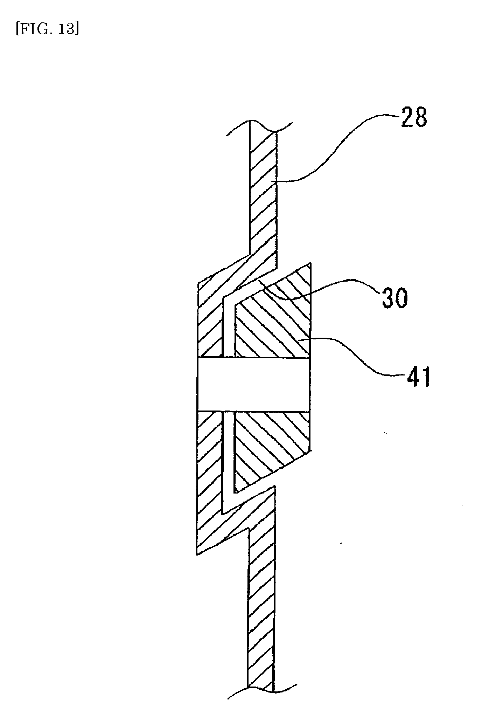

Fig. 13 is a cross section showing a sixth embodiment of the present invention. In the present embodiment, both upper and lower end portions of the vehicle-body-side bracket 41 of the bracket 40 is inclined downward to the vehicle body, and the recessed portion 30 of the attaching portion 28 of the vehicle body 1 is also formed such that the upper and lower inner wall surfaces thereof are inclined downward to the vehicle body. With this configuration, the bracket 41 can also be held while being non-rotatably engaged with the recessed portion 30 so as to be substantially entirely fitted to the recessed portion 30, and the attaching piece 23 of the curtain airbag 20 can be temporarily fixed to the attaching portion 28 of the vehicle body 1 via the bracket 40, and prevented from rotating.

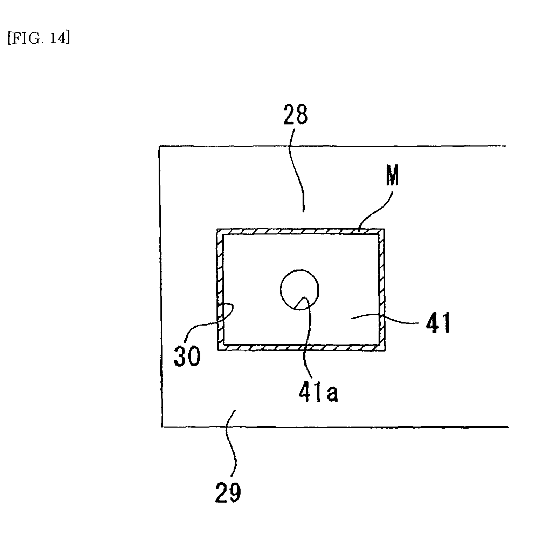

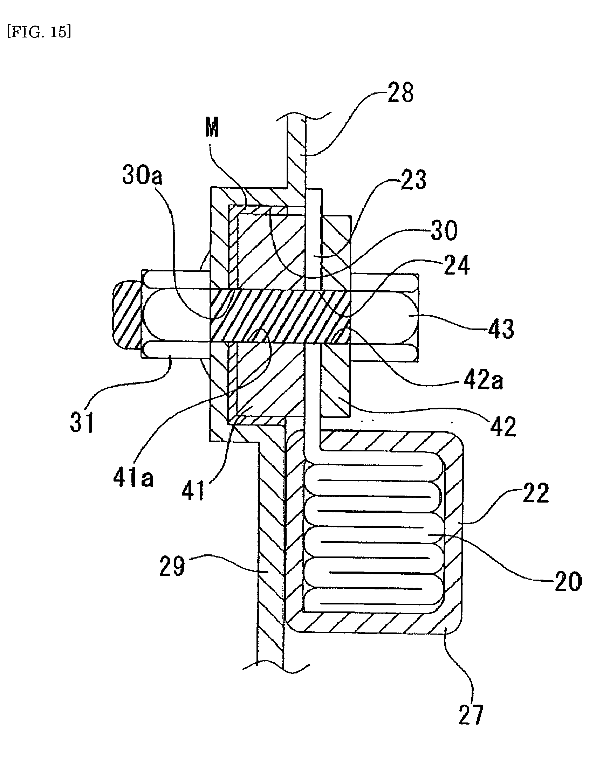

Fig. 14 is a partially omitted, front elevation showing an attaching portion 28 of a vehicle body 1 according to a seventh embodiment of the present invention, in which members of the bracket 40 at a front side with respect to the vehicle-body-side bracket 41 are omitted. Fig. 15 is a cross section showing an attaching structure of a curtain airbag 20 to the attaching portion 28.

In the present embodiment, the vehicle-body-side bracket 41 of the bracket 40 is housed in the recessed portion 30 so as to be substantially entirely fitted to the recessed portion 30. Further, a gap formed between the vehicle-body-side bracket 41 and the recessed portion 30 is filled with a gap-filling member M (for example, made of an appropriate elastic member, or resin). Thereby, the vehicle-body-side bracket 41 can be non-rotatably engaged with the recessed portion 30, and then is held. In addition, the attaching piece 23 of the curtain airbag 20 can be temporarily fixed to the attaching portion 28 of the vehicle body 1 via the bracket 40 and the attaching piece 23 can be prevented from rotating.

As a specific example of the cloth member M, for example, a cloth member having a thickness and an elasticity, such as a felt can be used. In this case, it is preferable to previously bond the cloth member M onto a surface of the vehicle-body-side bracket 41, the surface coming into contact with a bottom portion of the recessed portion 30. In this case, an opening for inserting the attaching bolt 43 is formed at a center of the cloth member M. The size of the cloth member M may be preferably slightly larger than that of the vehicle-body-side bracket 41 (see Fig. 14). The thickness of the cloth member M may be appropriately determined according to the fitting degree of the vehicle-body-side bracket 41 to the recessed portion 30, and can be determined to a value, for example, from about 1 to 5 mm.

In a case where the bracket with the cloth member M is attached to a vehicle body, an attaching worker places a bonding surface of the cloth member M of the vehicle-body-side bracket 41 to face the recessed portion 30 of the vehicle body, and arranges the vehicle-body-side bracket 41 to be embedded in the recessed portion 30 such that a peripheral edge of the cloth member M is folded. At this moment, the folded cloth member M is compressed in a thickness direction and fills the gaps where four upper, lower, left, and right sides of the vehicle-body-side bracket 41 face the inner wall surfaces of the recessed portion 30. Thereby, the vehicle-body-side bracket 41 is tightly fitted to the recessed portion 30. Accordingly, the rotation can be prevented, and the temporarily fixing operation can be performed. Of course, the gap-filling member M, such as the cloth member M, may be previously bonded to the vehicle-body-side bracket 41 as in the present embodiment, or may be mounted on the recessed portion 30 at the vehicle body side.

Further, such the gap-filling member M may be applied to any of the configurations of the above-described first to sixth embodiments. In this case, the anti-rotation function and the temporarily fixing function in each configuration can be further enhanced. In particular, in a case where the gap-filling member M is used for the recessed portion 30 shown in Fig. 7(h), gaps between the two opposite, left and right sides of the vehicle-body-side bracket 41, and the inner wall surfaces of the recessed portion 30 are filled with the gap-filling member M. Accordingly, the rotation can be prevented, and also, the temporarily fixing can be performed.

While the vehicle-body-side bracket 41 and the vehicle-cabin-side bracket 42 of the bracket 40 are made of metal in any of the embodiments described above, at least the vehicle-body-side bracket 41 may be made of plastic. With this configuration, the vehicle-body-side bracket 41 can be flexible, and therefore the bracket 40 can be easily engaged with the recessed portion 30 of the attaching portion 28 of the vehicle body 1.

In the description above, while the plurality of attaching pieces 23 provided at the upper end of the curtain airbag 20 are screwed to the plurality of attaching portions 28 provided at the vehicle body with the attaching bolts 43 via the brackets 40, the present invention is not limited thereto. The present invention may also be applied to a configuration in which the attaching piece 23 is not fixed to the vehicle body, is attached to the bracket 40 by other means instead of the attaching bolts 43 for fixture to the vehicle body, and the bracket 40 with the attaching piece 23 fixed is attached to the vehicle body with an attaching bolt for the fixture to the vehicle body. In this case, a similar advantage is obtained.

### Brief Description of the Drawings

[Fig. 1] Fig. 1 is an explanatory view showing a condition in which a curtain airbag apparatus is attached to an automobile according to a first embodiment of the present invention.
[Fig. 2] Fig. 2 is a partially broken perspective view showing a curtain airbag main body of the curtain airbag apparatus according to the first embodiment.
[Fig. 3] Fig. 3 is a cross section showing an attaching structure for the curtain airbag to an attaching portion of a vehicle body according to the first embodiment.
[Fig. 4] Fig. 4 is an exploded perspective view showing the attaching structure according to the first embodiment.
[Fig. 5] Fig. 5 is a perspective view showing an attaching portion of a vehicle body for a curtain airbag according to a second embodiment of the present invention.
[Fig. 6] Fig. 6 is a cross section showing an attaching structure for the curtain airbag to the attaching portion of the vehicle body according to the second embodiment.
[Fig. 7] Fig. 7 is a front elevation showing various modifications of beads each forming a recessed portion at the attaching portion of the vehicle body according to the second embodiment.
[Fig. 8] Fig. 8 is a partially omitted, front elevation showing an attaching portion of a vehicle body according to a third embodiment of the present invention.
[Fig. 9] Fig. 9 is a cross section showing an attaching structure for a curtain airbag to the attaching portion of the vehicle body according to the third embodiment.
[Fig. 10] Fig. 10 is a partially omitted, front elevation showing an attaching portion of a vehicle body according to a fourth embodiment of the present invention.
[Fig. 11] Fig. 11 is a perspective view showing a supporting frame of a bracket used in a fifth embodiment of the present invention.
[Fig. 12] Fig. 12 is a cross section showing a condition in which the supporting frame is mounted on an attaching portion of a vehicle body according to the fifth embodiment.
[Fig. 13] Fig. 13 is a cross section showing a condition in which a bracket is engaged with a recessed portion of an attaching portion of a vehicle body according to a sixth embodiment of the present invention.
[Fig. 14] Fig. 14 is a partially omitted, front elevation showing an attaching portion of a vehicle body according to a seventh embodiment of the present invention.
[Fig. 15] Fig. 15 is a cross section showing an attaching structure for the curtain airbag to the attaching portion of the vehicle body according to the seventh embodiment.

### Reference Numerals

- 1: vehicle body
- 8: attaching portion
- 20: curtain airbag
- 21: curtain airbag main body
- 23: attaching piece
- 30: recessed portion
- 40: bracket
- 41: vehicle-body-side bracket
- 42: vehicle-cabin-side bracket
- 43: attaching bolt
- M: gap-filling member

## Claims

1. A curtain airbag apparatus, wherein
a folded airbag is held by a holding member capable of being ruptured,
a plurality of attaching pieces are provided at an upper end of the airbag,
brackets respectively attached to the attaching pieces are screwed to a plurality of attaching portions provided at a vehicle body,
an inflator is provided for supplying compressed fluid that inflates and deploys the airbag, and
each of the brackets is non-rotatably engaged with each of the attaching portions of the vehicle body by utilizing fitting between recessed and protruding structures.

2. The curtain airbag apparatus according to Claim 1, wherein
the bracket has a shape provided with at least two opposite sides, and
a recessed portion is provided at the attaching portion of the vehicle body, the recessed portion non-rotatably supporting the bracket because inner surfaces of the recessed portion come into contact with the two opposite sides of the bracket.

3. The curtain airbag apparatus according to Claim 1, wherein
the bracket has a shape provided with at least two opposite sides, and
a protruding ridge and a recessed portion are provided at the attaching portion of the vehicle body, the recessed portion non-rotatably supporting the bracket because inner surfaces of the recessed portion come into contact with the two opposite sides of the bracket.

4. The curtain airbag apparatus according to Claim 2 or 3, wherein the two opposite sides of the bracket are upper and lower sides thereof.

5. The curtain airbag apparatus according to Claim 4, wherein a pressing piece protrudes from a peripheral edge portion of the recessed portion to an opening plane of the recessed portion, the pressing piece pressing a side of the bracket.

6. The curtain airbag apparatus according to Claim 5, wherein the pressing piece is made of a member provided separately from the vehicle body, the pressing piece being attached to the peripheral edge portion of the recessed portion of the vehicle body.

7. The curtain airbag apparatus according to Claim 1, wherein
the bracket has a shape provided with at least two opposite sides,
a pair of supporting frames having grooves are attached to the attaching portion of the vehicle body with an interval, and
a recessed portion is provided between the pair of supporting frames, the recessed portion housing the bracket by inserting the two opposite sides of the bracket to the grooves.

8. The curtain airbag apparatus according to any one of Claims 2 to 7, wherein the bracket is made of plastic.

9. The curtain airbag apparatus according to any one of Claims 2 to 8, wherein
the bracket has a vehicle-body-side bracket and a vehicle-cabin-side bracket being attached to the attaching piece of the curtain airbag so as to sandwich the attaching piece from both sides, and
the vehicle-body-side bracket is engaged with the recessed portion of the attaching portion of the vehicle body.

10. The curtain airbag apparatus according to Claim 9, wherein a gap-filling member is provided between the vehicle-body-side bracket and the recessed portion of the attaching portion of the vehicle body.
